# EUROPEAN PATENT APPLICATION

(11) **EP 4 838 864 A1**
(43) Date of publication of application: **11.11.2026**
(21) Application number: 26170477.9
(22) Date of filing: 02.04.2026
(51) Int. Cl.: H04L 51/224, H04L 51/046, H04L 51/214

(54) **METHODS, DEVICES, STORAGE MEDIUMS AND PROGRAM PRODUCTS FOR MESSAGE OUTPUT**

(30) Priority: 08.05.2025 CN 202510591991
(71) Applicant: Beijing Zitiao Network Technology Co., Ltd., Beijing 100190 (CN)
(72) Inventor: HAN, Zhimin, Beijing, 100028 (CN); WANG, Han, Beijing, 100028 (CN)
(74) Representative: Marks & Clerk LLP

(57) **Abstract**

According to the embodiments of the present disclosure, methods, devices, storage mediums and program products for message output are provided. The method (300) includes: determining (310), based on confirmation of message output via an external device, a message to be output via the external device; and outputting (320), based on a message output policy for the external device, the determined message via the external device.

## Description

### TECHNICAL FIELD

Example embodiments of the present disclosure generally relate to the field of computers, and in particular, to methods, devices, storage mediums and program products for message output.

### BACKGROUND

With the development of information technology, various terminal devices may provide people with various services in work and life. For example, a terminal device or an external device in cooperation with the terminal device connected thereto may implement an output service of notification messages of applications in the terminal device. This may facilitate a user to timely and conveniently learn the notification messages of the application received by the terminal device.

### SUMMARY

In a first aspect of the present disclosure, a method for message output is provided. The method includes: determining, based on confirmation of message output via an external device, a message to be output via the external device; and outputting, based on a message output policy for the external device, the determined message via the external device.

In a second aspect of the present disclosure, a method for message output is provided. The method includes: receiving a message to be output from a terminal device, where the message is determined by the terminal device based on a message output policy configured for the external device; and outputting, by the external device, the received message.

In a third aspect of the present disclosure, an apparatus for message output is provided. The apparatus includes: a message determining module configured to determine, based on confirmation of message output via an external device, a message to be output via the external device; and a message outputting module configured to output, based on a message output policy for the external device, the determined message via the external device.

In a fourth aspect of the present disclosure, an apparatus for message output is provided. The apparatus includes: a message receiving module configured to receive a message to be output from a terminal device, where the message is determined by the terminal device based on a message output policy configured for the external device; and a message outputting module configured to output, by the external device, the received message.

In a fifth aspect of the present disclosure, a wearable device is provided, which is configured to perform the method of the second aspect.

In a sixth aspect of the present disclosure, an electronic device is provided. The device includes at least one processor; and at least one memory coupled to the at least one processor and storing instructions for execution by the at least one processor, the instructions, when executed by the at least one processor, causing the device to perform the method of the first aspect or the second aspect.

In a seventh aspect of the present disclosure, a computer-readable storage medium is provided. The computer-readable storage medium has a computer program stored thereon which is executable by a processor to implement the method of the first aspect or the second aspect.

In an eighth aspect of the present disclosure, a computer program product is provided. The computer program product is tangibly stored in a computer storage medium and includes computer-executable instructions which, when executed by a device, cause the device to perform the method of the first aspect or the second aspect.

It should be appreciated that the content described in the Summary section of the present disclosure is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference symbols refer to the same or similar elements, where:
Fig. 1 illustrates a schematic diagram of an example environment in which the embodiments according to the present disclosure may be implemented;
Figs. 2A to 2C illustrate example interfaces for message output according to some embodiments of the present disclosure;
Figs. 3 to 4 illustrate flowcharts of example processes for message output according to some embodiments of the present disclosure;
Figs. 5 to 6 illustrate schematic structural block diagrams of example apparatuses for message output according to some embodiments of the present disclosure; and
Fig. 7 illustrates a block diagram of an electronic device capable of implementing a plurality of embodiments of the present disclosure.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Instead, these embodiments are provided for a more thorough and complete understanding of the present disclosure. It should be understood that the drawings and embodiments of the present disclosure are only for the purpose of examples, and are not intended to limit the protection scope of the present disclosure.

It should be noted that the titles of any section/subsection provided herein are not restrictive. Various embodiments are described throughout this article, and any type of embodiment may be included under any section/subsection. In addition, the embodiments described in any section/subsection may be combined with any other embodiments described in the same section/subsection and/or different section/subsection in any manner.

In the description of the embodiments of the present disclosure, the term "include/comprise" and similar terms thereof should be understood as open-ended inclusions, that is, "include/comprise but not limited to". The term "based on" should be understood as" based at least in part on". The term "one embodiment" or "the embodiment" should be understood as "at least one embodiment". The term "some embodiments" should be understood as "at least some embodiments". Other explicit and implicit definitions may also be included below. The terms "first", "second", and the like may refer to different or same objects. Other explicit and implicit definitions may also be included below.

The embodiments of the present disclosure may involve user's data, data obtainment and/or use, and the like. These aspects all comply with the corresponding laws, regulations and related provisions. In the embodiments of the present disclosure, all data collection, acquisition, processing, machining, forwarding, use, and the like are carried out on the premise that the user knows and confirms. Accordingly, when implementing the various embodiments of the present disclosure, the user should be informed of the type, range of use, use scenarios, and the like of the data or information that may be involved and acquire the user's authorization in an appropriate manner in accordance with relevant laws and regulations. The specific manner of informing and/or authorizing may vary according to the actual situation and application scenarios, and the scope of the present disclosure is not limited in this regard.

If the solutions in this specification and the embodiments involve personal information processing, the processing will be carried out on the premise that there is a legal basis (for example, the consent of the personal information subject is obtained, or it is necessary for the performance of a contract, and the like), and the processing will only be carried out within the scope of provisions or agreements. If the user refuses to process personal information other than the necessary information required for the basic functions, it will not affect the user's use of the basic functions.

As mentioned above, a terminal device or an external device in cooperation with the terminal device connected thereto may implement the message output service. However, in the conventional method, after determining the message to be output, the message is usually output by the terminal device or the external device connected thereto. When there is no message to be output, the terminal device or the external device cannot actively initiate interaction with the user. This leads to poor interactivity between the device and the user and poor user experience. In addition, the conventional message output method cannot support the user to perform diversified settings for the message output. In other words, the conventional message output method outputs messages based on a configured fixed message output policy. This cannot meet the needs of users.

The embodiments of the present disclosure provide an improved solution for message communication. In this solution, a message to be output via an external device is determined based on confirmation of message output via the external device. Then, the determined message is output via the external device based on a message output policy for the external device. In this way, the embodiments of the present disclosure are able to support the user to control confirmation or cancellation of the message output. In the case that the user confirms the message output, the determined message may be output via the external device based on the message output policy generated according to various settings of the user for the message output. This helps to meet the user's diversified setting requirements for message output, and thus improves user experience.

Various example implementations of this solution will be described in more detail below with reference to the drawings.

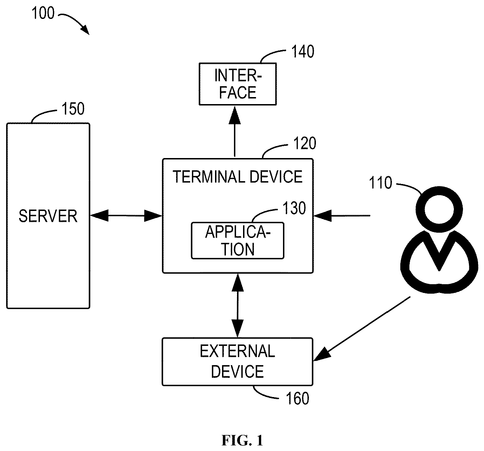

Fig. 1 illustrates a schematic diagram of an example environment 100 in which the embodiments of the present disclosure may be implemented. As shown in Fig. 1, the example environment 100 may include a user 110, a terminal device 120, a server 150, and an external device 160.

In the environment 100, the terminal device 120 may be any type of mobile terminal, fixed terminal or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including the accessories and peripherals of these devices or any combination thereof. In some embodiments, the terminal device 120 may also support any type of interface for the user 110 (such as a "wearable" circuit, and the like).

In some embodiments, an application 130 may be run on the terminal device 120. The application 130 may be any appropriate type of application that may provide various services for the user 110. As an example, the application 130 may be an application that may provide an online shopping service for the user 110. As another example, the application 130 may be an application used to summarize notification messages from the terminal device 120. The notification messages may include notification messages for the system of the terminal device 120 (such as a notification message for the system power, a notification message for the network connection state of the system, and the like) and notification messages for other applications in the terminal device 120 (such as a notification message for informing applications, a notification message for social communication applications, and the like).

In the environment 100, the user 110 may interact with the application 130 via the terminal device 120 and/or its attached device. If the application 130 is in an active state, the terminal device 120 may present an interface 140 by the application 130. Herein, the interface 140 may be a configuration interface for message output.

In some embodiments, the terminal device 120 communicates with the server 150 to implement the provision of the service of the application 130. The server 150 may be an independent physical server, a server cluster or a distributed system composed of a plurality of physical servers, or may be a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 150 may include, for example, a computing system/server, such as a mainframe, an edge computing node, a computing device in a cloud environment, and so on. The server 150 may provide a background service for the application 130 that summarizes and outputs the notification message of the application in the terminal device 120.

A communication connection may be established between the server 150 and the terminal device 120. The communication connection may be established in a wired or wireless manner. The communication connection may include but not limited to a Bluetooth connection, a mobile network connection, a Universal Serial Bus (USB) connection, a Wireless Fidelity (WiFi) connection, and the like, and the embodiments of the present disclosure are not limited in this regard.

In the environment 100, the external device 160 may be a terminal device capable of being connected to the terminal device 120 in a wireless or wired communication manner. The wireless communication manner may include but not limited to cellular network communication, wireless local area network, Bluetooth, satellite communication, wireless personal area network, and the like. The wired communication manner may include but not limited to: USB communication, High-Definition Multimedia Interface (HDMI) communication, Video Graphics Array (VGA) communication, and the like. The external device 160 may include but not limited to: a wearable terminal device, a personal digital assistant (PDA), a portable computer, a desktop computer, an image capturing terminal device such as a digital camera, a game terminal device, a music storage and playback device, a vehicle-mounted wireless terminal device, a wireless endpoint, a mobile station, a laptop embedded device (LEE), a laptop mounting device (LME), a Universal Serial Bus (USB) dongle, a smart device, a wireless customer premise equipment (CPE), an Internet of Things (IoT) device, a watch or other wearable device, a head-mounted display (HMD), a vehicle, a drone, a medical device and applications (e.g., remote surgery), an industrial device and applications (e.g., robots and/or other wireless devices operating in an industrial and/or automated processing chain environment), a consumer terminal device, a device running on a commercial and/or industrial wireless network, and the like.

It should be appreciated that the structure and function of various elements in the environment 100 are described only for the purpose of example, without suggesting any limitation to the scope of the present disclosure.

Some example embodiments of the present disclosure will be described below with continued reference to the drawings.

In the embodiments of the present disclosure, a message to be output via an external device may be determined based on confirmation of message output via the external device. The confirmation of the message output via the external device may indicate that a user allows the message to be output via the external device. It may be understood that the message to be output currently via the external device will be determined only on the basis that the user allows the message to be output via the external device. Next, the determined message may be output via the external device.

In some embodiments, the above control process for message output may be implemented at the terminal device 120 associated with the user 110. In some scenarios, the terminal device 120 may be communicatively connected to the external device 160. After receiving the confirmation of the message output via the external device 160, the terminal device 120 may determine a message to be output via the external device 160. Then, the terminal device 120 may send the determined message to the external device 160 via the communication connection with the external device 160. The terminal device 120 may control the external device 160 to output the determined message. For example, taking the external device 160 as a headphone and the terminal device as a mobile phone for an example, after the user allows playing the message of the mobile phone through the headphone, the operating system of the mobile phone may determine a message to be output through the headphone when receiving the message. Then, the operating system of the mobile phone may control the headphone to output the determined message. In another scenario, if the communication connection between the terminal device 120 and the external device 160 is disconnected, the terminal device 120 may output the determined message. In this way, when the user expects to obtain the message from the terminal device associated with the user, the user may be informed of the determined message to be output in time.

In another embodiment, the above control process for message output may be implemented at the external device 160 having a communication connection with the terminal device 120. In some scenarios, the external device 160 may receive the confirmation of the message output. Then, if the external device 160 receives a message to be output from the terminal device 120, the external device may output the received message. In another scenario, the external device 160 may receive a message to be processed from the terminal device 120 via the communication connection with the terminal device 120. Then, the external device 160 may determine a message to be output based on the received message. Further, the external device 160 may output the determined message.

Some embodiments described below may be illustrated by taking the message output control process implemented in the terminal device as an example.

In some embodiments, the type of the message output via the external device may be any suitable type of message, which may include but not limited to: a type indicating output of a notification message of an application in the terminal device (also referred to as a first message output type herein), a type indicating that the device actively initiates a chat with the user (also referred to as a second message output type herein).

In some embodiments, a message corresponding to the first message output type (also referred to as a first message herein) may be determined based on the notification message of the application on the terminal device 120. The notification message of the application may include information about various events, state changes of objects, and the like related to the specific application. For the purpose of example, the notification message of informing applications may include a latest news event. The notification message of social communication applications may include new dynamics of an object followed by the user.

In some embodiments, the first message may be a summary of one or more notification messages of one or more applications on the terminal device 120. The summary of the notification message of the application in the terminal device 120 may be completed by the application 130 in the terminal device 120 or its corresponding server. The application 130 may first determine summary information based on one or more obtained notification messages of one or more applications. The summary information may include but not limited to: a source of each notification message, a title of each notification message, and a reception time of each notification message. Then, the application 130 may generate the first message corresponding to the one or more notification messages based on the determined summary information. It should be appreciated that only an example process of determining the first message output via the external device 160 based on the notification message of the application is given here. In practical applications, the first message output via the external device 160 may be determined based on the notification message of the application according to any suitable method.

In some embodiments, a message corresponding to the second message output type (also referred to as a second message herein) may be determined based on interaction contextual information related to the user 110. The interaction contextual information associated with the user 110 may include but not limited to: historical interaction information between the user 110 and the application on the terminal device 120 (for example, information that the user 110 allows the application 130 on the terminal device 120 to access), historical setting information of the user 110 for the system of the terminal device 120 (for example, schedule information historically set by the user 110).

In some embodiments, the terminal device 120 or the external device 160 may use a configured machine learning model to automatically obtain and analyze the interaction contextual information related to the user 110. Note that the obtaining of the interaction contextual information should obtain the prior authorization of the user 110 and/or other rights subjects associated with the user 110, and should comply with the provisions of relevant laws and regulations and agreement rules between rights subjects. When it is determined through analysis that it is necessary to interact with the user 110 at an appropriate time, the terminal device 120 or the external device 160 may actively initiate a chat with the user 110. Taking the interaction contextual information related to the user 110 as schedule information historically set by the user 110 for an example, if the user 110 has set an alarm clock whose content involves "every day", "8:00", and "morning news" in the past, the terminal device 120 or the external device 160 may obtain and analyze the user's interaction operations on the alarm clock and/ other applications on the device in the past few days (such as turning off the alarm clock in advance, adjusting the time of the alarm clock, opening informing applications, and the like). If it is determined through analysis that the user 110 turns off the alarm clock on time at 8:00 every day in the past few days and opens an informing application, it may be determined that the user 110 has a habit of watching morning news at 8:00 every morning. Then, the terminal device 120 or the external device 160 may actively initiate a chat "Hey, it's almost time to broadcast morning news XXXX" at 7:59 every day. In this way, interaction experience between the user and the device may be improved.

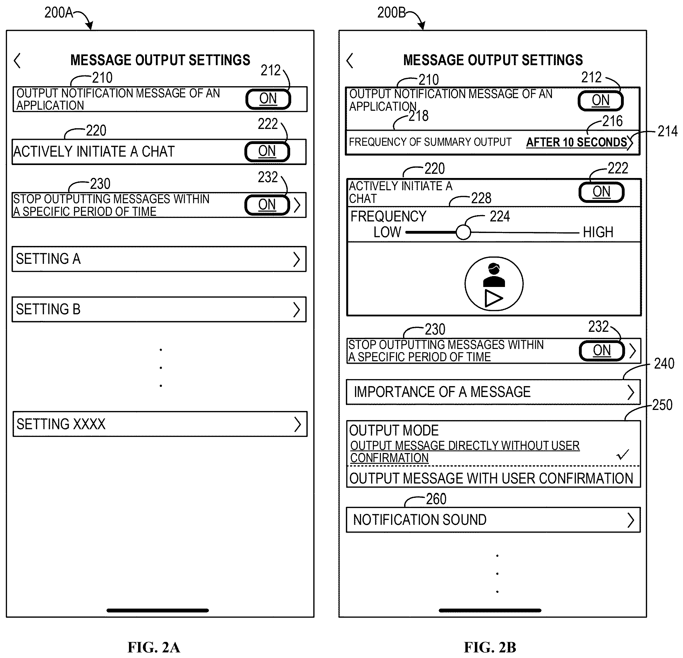

In some embodiments, in order to improve the interactivity of the device and the user experience, the user may be supported to manage different message output types via the external device 160. In some embodiments, the terminal device 120 or the external device 160 may present a setting interface in response to receiving a setting request from the user for the message output. The setting interface may at least include "ON" or "OFF" states of different message output types via the external device. If the "ON" state of one or more message output types is detected, the terminal device or the external device may determine confirmation of outputting one or more types of messages via the external device. Fig. 2A illustrates an example setting interface 200A for message output. The interface 200A may at least include a setting item 210 for outputting notification message of an application and a setting item 220 for actively initiating a chat. If the terminal device or the external device detects that the control 212 corresponding to the setting item 210 is in an "ON" state, it may determine the confirmation of outputting the notification message of the application via the external device. If the terminal device or the external device detects that the control 222 corresponding to the setting item 220 is in an "ON" state, it may determine the confirmation of actively initiating a chat via the external device. It should be appreciated that only an example manner of receiving the confirmation of the message output via the external device is given here. In practical applications, the device may receive the confirmation of the message output via the external device in any suitable manner.

In the embodiments of the present disclosure, after determining the message to be output via the external device, the determined message may be output via the external device based on a message output policy for the external device. The message output policy may be a predefined or user-configured policy for message output. The user-configurable message output policy will be described below with reference to Fig. 2A to Fig. 2C.

In some embodiments, the message output policy may indicate a message output frequency. The message output frequency may refer to a time interval between two adjacent message outputs via the external device, and may further refer to the number of times of outputting messages via the external device within a period of time. The external device may output messages by itself according to the message output frequency, or the terminal device may control the external device to output messages according to the message output frequency. For example, for the first message output type, that is, the summary of the notification message of the application on the terminal device, the message output frequency may be limited to a summary message to be output within a period of time, for example, the notification messages received by the terminal device 120 within 10 minutes or half an hour are summarized and output via the external device. For the second message output type, that is, the actively initiated message output, the message output frequency may limit the frequency of active conversation with the user.

In some embodiments, the message output frequency may be predefined or user-configurable. The message output frequencies for the first message output type and the second message output type may be the same or different. Fig. 2B illustrates an example interface 200B for the configuration of the message output frequency of the external device. The interface 200B may present a setting item 218 for the frequency of summary output. The frequency of summary output may be the message output frequency for the first message output type. As an example, the frequency of summary output may indicate a time interval between two time points. For example, the start time point may be the time point when the terminal device receives the notification message of the application. The end time point may be the time point when the summary of the received notification message of the application is output via the external device.

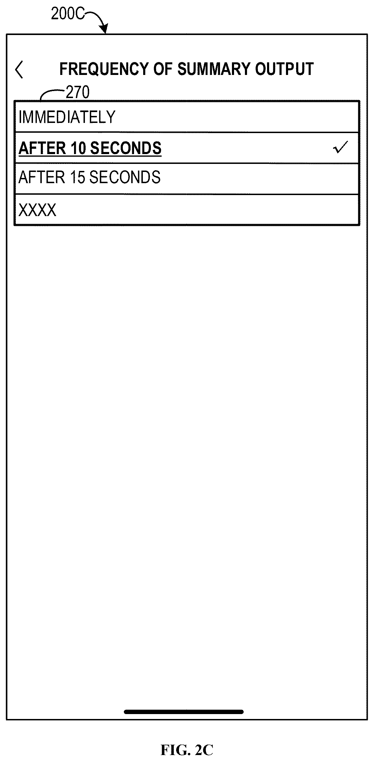

In some embodiments, the user 110 may trigger the control 214 in the interface 200B shown in Fig. 2B to set the frequency of summary output of notification message of an application. The terminal device 120 or the external device 160 may present the interface 200C shown in Fig. 2C after receiving the trigger of the user 110 on the control 214 in the interface 200B. The interface 200C may present a plurality of candidate frequencies (such as "immediately", "after 10 seconds", "after 15 seconds", and the like) at least in the region 270. If the terminal device 120 or the external device 160 receives the selection of "after 10 seconds", "after 10 seconds" by the user 110 may be presented in a selected state. The terminal device 120 or the external device 160 may further present "after 10 seconds" selected by the user 110 at the position 216 in the interface 200B shown in Fig. 2B to prompt the user 110 of the frequency of summary output of notification message of an application set by the user.

Continuing to refer to Fig. 2B, the interface 200B further presents a setting item 228 for the frequency corresponding to actively initiating a chat. As an example, the setting item 228 for the frequency of actively initiating a chat is presented in the interface 200B in the form of a sliding bar. The user 110 may adjust the frequency of actively initiating a chat via the external device 160 by sliding the control 224 presented in the interface 200B left and right. It should be appreciated that only an example presentation form of the setting item for the frequency of actively initiating a chat is given here. In practical applications, the setting item for the frequency of actively initiating a chat may be presented in any suitable form.

In some embodiments, the message output policy may further indicate an output mode of the message by the external device. The external device may output the message by itself according to the output mode of the message, or the terminal device may control the external device to output the message according to the message output mode. The output mode of the message may be various output modes. Herein, the output mode of the message may include: a first output message mode indicating the message output without user confirmation, and a second output message mode indicating the message output with user confirmation.

In some embodiments, if the message output mode is the first output message mode, after determining a message to be output, the external device directly outputs the message, or the terminal device may directly control the external device to output the message without user confirmation.

In some embodiments, if the message output mode is the second output message mode, the external device may output a predefined or user-configured request message by itself. Or the terminal device may control the external device to output a predefined or user-configured request message. The request message may be used to request the user to confirm whether he/she is able or convenient to receive the message. The request message may be, for example, a short message such as "Hey, are you there".

In some embodiments, after outputting the request message, if a reply to the request message is received and the reply indicates permission of message output, the external device may output the message by itself, or the terminal device may control the external device to output the message. If no reply to the request message is received after a preset duration, or if the reply to the request message indicates rejection of the message output, the external device may stop outputting the message by itself, or the terminal device may control the external device to stop outputting the message.

In some embodiments, the permission or rejection of the message output may be identified by analyzing keywords in the reply to the request message. For example, if the reply to the request message involves keywords such as "I'm here", "please speak" indicating to continue outputting the message, it may be determined that the user 110 allows to continue outputting the message via the external device 160. If the reply to the request message involves keywords such as "no", "I'm busy" indicating intention of rejection, it may be determined that the user 110 rejects the message output via the external device 160.

In other embodiments, the permission or rejection of the message output may be determined by detecting the posture or movement of the user 110 wearing the external device 160. For example, if the head posture of the user 110 is detected to be "nod", the permission of the message output may be determined. If the head posture of the user 110 is detected to be "shake", the rejection of the message output may be determined.

It should be appreciated that only example manners of determining the permission and rejection of the message output are given above. In practical applications, the permission and rejection of the message output may be determined in any suitable manner.

In some embodiments, the output mode of the message may be determined based on a user setting for the output mode. As shown in Fig. 2B, the interface 200B may present a setting item 250 for the output mode of the message. The setting item 250 may present a plurality of candidate output modes in the form of a list. The user 110 may freely select a desired output mode according to their needs.

In another embodiment, the output mode of the message may be determined based on the importance of the message. The importance of the message may indicate the user's 110 attention to the message. The higher the importance of the message, the higher the attention of the user 110 to the message. In some embodiments, the output mode of the message may be set by the user 110 based on the importance of the message. For the purpose of example, if the user deems that the importance of a message from application A to be high, or if the user expects to pay attention to the message from the application A, the output mode for the message of the application A may be set to the first message output mode. If the user deems that the importance of a message from application B to be low, or if the user does not want to receive the message from the application B, the output mode for the message of the application B may be set to the second message output mode.

In some embodiments, the importance of the message may be set by the user, and the output mode of the message may be configured to be associated with the importance of the message. Continuing to refer to Fig. 2B, the interface 200B may present a setting item 240 for importance of a message. If it is received based on the setting item 240 that the user sets the importance of the message of the application A to first importance, it may be determined that the output mode of the message from the application A is the first message output mode. If it is received based on the setting item 240 that the user sets the importance of the message from the application B to second importance which is lower than the first importance, it may be determined that the output mode of the message from the application B is the second message output mode. It may be understood that the setting confirmation for the setting item 240 may be applied to the first message output type and the second message output type.

In some embodiments, the importance of the message may be automatically identified by the terminal device 120 or the external device 160. For the purpose of example, the server 150 connected to the terminal device 120 or the external device 160 may be configured with a machine learning model. After receiving a notification message from an application in the terminal device 120, the machine learning model may analyze the notification message from the application. For example, the machine learning model may analyze information such as the number of historical interactions between the user 110 and the application, and average interaction duration. If the number of historical interactions between the user 110 and the application is greater than a number threshold and the average interaction duration each time is higher than a duration threshold, it may be determined that the notification message from the application has a high importance.

In some embodiments, the message output policy may further indicate a notification sound associated with the message. The notification sound may be used to indicate the source of the message or the type of the message. After determining the message to be output, the external device may first output the notification sound associated with the message to be output by itself, and then output the message. Alternatively, the terminal device may first control the external device to output the notification sound associated with the message to be output. Then, the terminal device controls the external device to output the message. The notification sound associated with the message may be predefined or may be configured by the user. Taking the user configuring the notification sound associated with the message as an example, as shown in Fig. 2B, the interface 200B may present a setting item 260 for a notification sound of the message. The user 110 may set the notification sound of the messages from different applications by triggering the setting item 260. For example, the user 110 may set the notification sound of a notification message from the application E to "Hey", and may set the notification sound of a notification message from the application F to "Are you there". If it is determined that the notification message from the application F is to be output, the notification sound "Are you there" corresponding to the application F may be output via the external device 160 first. Then, the notification message of the application F is output via the external device 160.

In some embodiments, the message output policy may further indicate to stop outputting message notification within a predefined time period. The predefined time period may refer to a time period when the user does not want to receive messages. The external device may detect whether the current time is within the predefined time period by itself. If it is detected that the current time is not within the predefined time period, the message may be output. Alternatively, the terminal device may detect whether the current time is within the predefined time period after determining the message to be output. If it is detected that the current time is not within the predefined time period, the terminal device may control the external device to output the message.

In some embodiments, the predefined time period may be configured to be associated with the system setting of the external device or the terminal device. For example, if the user sets the system of the terminal device to be in the Do Not Disturb mode between 23:00 and 6:00 the next day, the predefined time period corresponding to stopping outputting messages may be determined to be between 23:00 and 6:00 the next day. In another embodiment, the predefined time period corresponding to stopping outputting messages may be set by the user. As shown in Fig. 2A, the interface 200A may present a setting item 230 for stopping outputting messages within a specific period of time. The user may decide whether to set the control 232 to be in an "ON" state according to his/her own needs to indicate to stop outputting messages within the specific period of time. In addition, the predefined time period corresponding to stopping outputting messages may also be manually entered by the user.

It should be appreciated that only an example configuration of the setting item for the message output is given above. For example, setting items such as importance, output mode, notification sound, and time period for stopping outputting messages of corresponding messages may be respectively configured for the first message output type and the second message output type.

In some embodiments, in order to improve the effect of the message output, after determining the message to be output, the external device may determine whether a conflict condition related to the message output is satisfied. If it is determined that the conflict condition related to the message output is satisfied, the external device may set the message to be output to a waiting state. If it is determined that the conflict condition related to the message output is not satisfied, the external device outputs the message. Or, after determining the message to be output, the terminal device may determine whether a conflict condition related to the message output is satisfied. If it is determined that the conflict condition related to the message output is satisfied, the terminal device may set the message to be output to a waiting state. If it is determined that the conflict condition related to the message output is not satisfied, the terminal device may control the external device to output the message.

The conflict condition related to the message output may include but not limited to: whether a call is being made via the external device, and a wearing state of the external device. As an example, the wearing state of the external device may be determined by detecting whether there is a sound exceeding a preset decibel value within a preset distance range of the external device. If it is determined by detection that there is a sound exceeding the preset decibel value within the preset distance range of the external device, the message that needs to be output via the external device may be set to the waiting state. After it is determined by detection that there is no sound exceeding the preset decibel value within the preset distance range of the external device, the determined message may be output via the external device. If it is determined by detection that there is no sound exceeding the preset decibel value within the preset distance range of the external device, the determined message may be directly output via the external device. In this case, it may be avoided that the user cannot completely obtain or cannot obtain the message output via the external device due to excessive decibel value of the sound around the external device.

It should be appreciated that only an example of the conflict condition is given above, and in practical applications, any suitable conflict condition may be configured as needed.

Through the above various embodiments, the present disclosure is able to support the user to confirm different message output types, to output the message corresponding to the message output type confirmed by the user via the external device. In particular, after the user adjusts the message output type indicating actively initiating a chat to be in an "ON" state, the chat with the user may be actively initiated via the external device. This improves the interactivity between the user and the device, and improves user experience. In addition, the present disclosure supports the user to freely set various setting items for message output according to their needs. This meets the user's diversified setting requirements for message output, and further improves user experience.

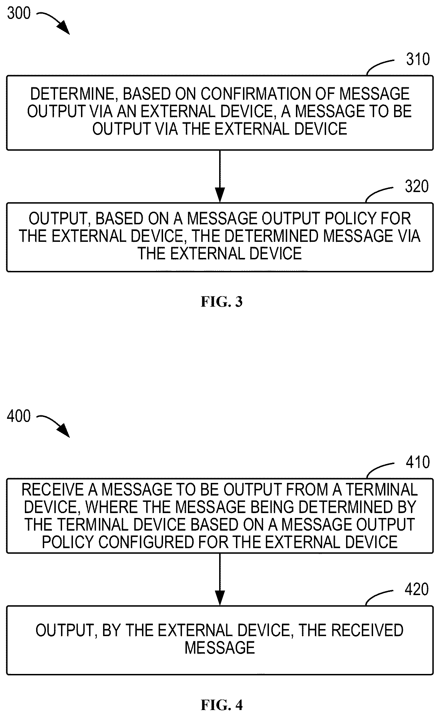

Fig. 3 illustrates a flowchart of an example process 300 for message output according to some embodiments of the present disclosure. The process 300 may be implemented at the terminal device 120 or the external device 160 connected thereto. The process 300 will be described below with reference to Fig. 1.

As shown in Fig. 3, at block 310, the terminal device 120 or the external device 160 connected thereto determines a message to be output via the external device 160 based on confirmation of message output via the external device 160.

At block 320, the determined message is output via the external device 160 based on a message output policy for the external device 160.

In some embodiments, the terminal device 120 or the external device 160 connected thereto generates a first message output via the external device based on a notification message of at least one application on the terminal device based on confirmation of a first message output type via the external device, where the terminal device may be communicatively connectable to the external device; and determines a second message output via the external device based on interaction contextual information related to a user based on confirmation of a second message output type via the external device.

In some embodiments, the first message is a summary of the notification message of the at least one application, and the terminal device 120 determines summary information based on the notification message of the at least one application; and generates the first message based on the summary information.

Through the above method, the user may freely set the type of the message to be output via the device. The device may provide the user with a specific type of message that the user expects to obtain based on the user's settings. Thus, the user's experience of obtaining the message may be improved. In addition, based on the confirmation of the second message output type, the device may inform the user of the message that the user is interested in by actively initiating a chat with the user after determining the message to be output based on the interaction contextual information related to the user. This may improve the interaction experience between the user and the device.

In some embodiments, the message output policy indicates a message output frequency and/or an output mode of the message by the external device, and the terminal device 120 outputs the message via the external device according to the message output frequency; and/or outputs the message via the external device according to the output mode. In this way, the user may flexibly set the frequency and output mode for message output according to his/her own needs. This may meet the user's diversified setting requirements for message output.

In some embodiments, the terminal device 120 or the external device 160 connected thereto outputs the message via the external device in response to the output mode being a first output mode; or in response to the output mode being a second output mode, outputs, via the external device, a request message for requesting user confirmation; and outputs the message via the external device in response to receiving a reply to the request message and the reply indicating permission of the message output. In this way, the device may flexibly output the determined message based on different output modes.

In some embodiments, the terminal device 120 or the external device 160 connected thereto stops outputting the message in response to no reply being received after a preset duration of outputting the request message, or in response to the reply being received and indicating rejection of the message output.

In some embodiments, the terminal device 120 or the external device 160 connected thereto determines the output mode of the message by the external device based on a user setting for the output mode; or determines the output mode of the message by the external device based on importance of the message.

In some embodiments, the terminal device 120 or the external device 160 connected thereto determines the output mode of the message by the external device based on the importance of the message in response to a user setting for an importance-based output mode.

In some embodiments, the terminal device 120 or the external device 160 connected thereto determines that the output mode of the message by the external device is a first output mode in response to the message having first importance, where the first output message mode indicates message output without user confirmation; and determines that the output mode of the message by the external device is a second output mode in response to the message having second importance, where the second output mode indicates message output with user confirmation, where the first importance is higher than the second importance.

Through the above method, it is supported to determine the output mode of the message based on diversified methods, and the user is supported to independently set the importance of the message. This may further meet the user's diversified setting requirements for message output.

In some embodiments, the message output policy further indicates a notification sound associated with the message, and the terminal device 120 or the external device 160 connected thereto outputs the notification sound associated with the message via the external device 160; and outputs the message via the external device after outputting the notification sound. In this way, before the message is output, the user may be prompted of information such as the source and/or type of the message by the notification sound. This may further improve the interactivity between the user and the device.

In some embodiments, the message output policy further indicates stopping outputting message notification within a predefined time period, and the terminal device 120 or the external device 160 connected thereto outputs the message via the external device in response to a detection that current time is not within the predefined time period. In this way, message output may be stopped during a specific period of time when the user does not expect to receive messages, thereby improving user experience.

In some embodiments, the terminal device 120 or the external device 160 connected thereto sets the message to a waiting state in response to a determination that a conflict condition related to the message output for the external device is satisfied; or, outputs the message via the external device in response to a determination that the conflict condition related to the message output for the external device is not satisfied.

In some embodiments, satisfaction of the conflict condition is determined based on at least one of the following: whether a call is being made via the external device; and a wearing state of the external device.

Through the above method, the device may determine whether the conflict condition related to the message output is satisfied before the message is to be output. If it is determined that the conflict condition related to the message output is satisfied, the device may set the message to be output to the waiting state. This may avoid the problem that the user cannot obtain the message due to continued message output when the conflict condition related to the message output is satisfied. Thus, the interaction experience between the user and the device may be further improved.

Fig. 4 illustrates a flowchart of an example process 400 for message output according to some embodiments of the present disclosure. The process 400 may be implemented at the external device 160 having a communication connection with the terminal device 120. The process 400 will be described below with reference to Fig. 1.

As shown in Fig. 4, at block 410, the external device 160 receives a message to be output from the terminal device 120, where the message is determined by the terminal device 120 based on a message output policy configured for the external device 160.

At block 420, the external device 160 outputs the received message.

In some embodiments, the external device 160 has a communication connection with the terminal device 120, and the external device 160 receives, from the terminal device 120 via the communication connection, a request message for requesting user confirmation in response to the terminal device 120 determining, based on the message output policy, that the message is to be output after user confirmation; the external device 160 outputs the request message for requesting user confirmation; and sends the received reply to the terminal device 120 via the communication connection in response to receiving a reply to the request message.

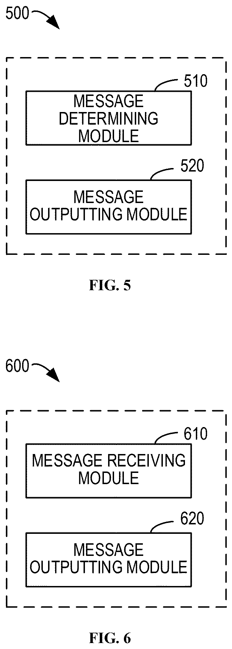

The embodiments of the present disclosure also provide corresponding apparatuses for implementing the above methods or processes. Fig. 5 illustrates a schematic structural block diagram of an example apparatus 500 for message output according to some embodiments of the present disclosure. The apparatus 500 may be implemented as or included in the terminal device 120. Each module/component in the apparatus 500 may be implemented by hardware, software, firmware, or any combination thereof.

As shown in Fig. 5, the apparatus 500 includes: a message determining module 510 configured to determine, based on confirmation of message output via the external device 160, a message to be output via the external device 160; and a message outputting module 520 configured to output, based on a message output policy for the external device 160, the determined message via the external device 160.

In some embodiments, the message determining module 510 may be further configured to: generate a first message output via the external device based on a notification message of at least one application on the terminal device based on confirmation of a first message output type via the external device, where the terminal device is communicatively connectable to the external device; and determine a second message output via the external device based on interaction contextual information related to a user based on confirmation of a second message output type via the external device.

In some embodiments, the first message is a summary of the notification message of the at least one application, and the message determining module 510 may be further configured to: determine summary information based on the notification message of the at least one application; and generate the first message based on the summary information.

In some embodiments, the message output policy indicates a message output frequency and/or an output mode of the message by the external device, and the message outputting module 520 may be further configured to: output the message via the external device according to the message output frequency; and/or output the message via the external device according to the output mode.

In some embodiments, the message outputting module 520 may be further configured to: output the message via the external device in response to the output mode being a first output mode; or in response to the output mode being a second output mode, output, via the external device, a request message for requesting user confirmation; and output the message via the external device in response to receiving a reply to the request message and the reply indicating permission of the message output.

In some embodiments, the message outputting module 520 may be further configured to: stop outputting the message in response to no reply being received after a preset duration of outputting the request message, or in response to the reply being received and indicating rejection of the message output.

In some embodiments, the message outputting module 520 may be further configured to: determine the output mode of the message by the external device based on a user setting for the output mode; or determine the output mode of the message by the external device based on importance of the message.

In some embodiments, the message outputting module 520 may be further configured to: determine the output mode of the message by the external device based on the importance of the message in response to a user setting for an importance-based output mode.

In some embodiments, the message outputting module 520 may be further configured to: determine that the output mode of the message by the external device is a first output mode in response to the message having first importance, where the first output message mode indicates message output without user confirmation; and determine that the output mode of the message by the external device is a second output mode in response to the message having second importance, where the second output mode indicates message output with user confirmation, where the first importance is higher than the second importance.

In some embodiments, the message output policy also indicates a notification sound associated with the message, and the message outputting module 520 may be further configured to: output the notification sound associated with the message via the external device 160; and output the message via the external device after outputting the notification sound.

In some embodiments, the message output policy also indicates stopping outputting message notification within a predefined time period, and the message outputting module 520 may be further configured to: output the message via the external device in response to a detection that current time is not within the predefined time period.

In some embodiments, the message outputting module 520 may be further configured to: set the message to a waiting state in response to a determination that a conflict condition related to the message output for the external device is satisfied; or, output the message via the external device in response to a determination that the conflict condition related to the message output for the external device is not satisfied.

In some embodiments, satisfaction of the conflict condition is determined based on at least one of the following: whether a call is being made via the external device; and a wearing state of the external device.

Fig. 6 illustrates a schematic structural block diagram of an example apparatus 600 for message output according to some embodiments of the present disclosure. The apparatus 600 may be implemented as or included in the external device 160. Each module/component in the apparatus 600 may be implemented by hardware, software, firmware, or any combination thereof.

As shown in Fig. 6, the apparatus 600 includes: a message receiving module 610 configured to receive, a message to be output from a terminal device 120, where the message is determined by the terminal device 120 based on a message output policy configured for the external device 160; and a message outputting module 620 configured to output, by the external device 160, the received message.

In some embodiments, the external device 160 has a communication connection with the terminal device 120, and the apparatus 600 also includes: a message confirming module configured to receive, from the terminal device 120 via the communication connection, a request message for requesting user confirmation in response to the terminal device 120 determining, based on the message output policy, that the message is to be output after user confirmation; output, by the external device 160, the request message for requesting user confirmation; and send the received reply to the terminal device 120 via the communication connection in response to receiving a reply to the request message.

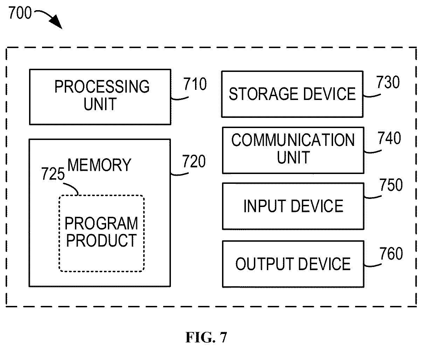

Fig. 7 illustrates a block diagram of an electronic device 700 capable of implementing a plurality of embodiments of the present disclosure. As shown in Fig. 7, the electronic device 700 is in the form of a general-purpose electronic device. The components of the electronic device 700 may include but not limited to at least one processor or processing unit 710, a memory 720, a storage device 730, one or more communication units 740, one or more input devices 750, and one or more output devices 760. The processor 710 may be a physical or virtual processor and may execute various processes based on the program stored in the memory 720. In a multi-processor system, a plurality of processors execute computer-executable instructions in parallel to improve the parallel processing capability of the electronic device 700.

The electronic device 700 typically includes a plurality of computer storage medium. Such medium may be any available medium that is accessible to the electronic device 700, including but not limited to volatile and non-volatile medium, removable and non-removable medium. The memory 720 may be a volatile memory (for example, a register, a cache, a random access memory (RAM)), a non-volatile memory (such as a read-only memory (ROM), an electrically erasable programmable read-only memory (EEPROM), a flash memory), or any combination thereof. The storage device 730 may be any removable or non-removable medium, and may include a machine-readable medium such as a flash drive, a disk, or any other medium, which may be used to store information and/or data and may be accessed within the electronic device 700.

The electronic device 700 may further include additional removable/non-removable, volatile/non-volatile memory medium. Although not shown in Fig. 7, a disk drive for reading from or writing to a removable, non-volatile disk (such as a "floppy disk"), and an optical disk drive for reading from or writing to a removable, non-volatile optical disk may be provided. In these cases, each drive may be connected to a bus (not shown) by one or more data medium interfaces. The memory 720 may include a computer program product 725, which has one or more program modules configured to perform various methods or acts of various embodiments of the present disclosure.

The communication unit 740 implements communication with other electronic devices via a communication medium. Additionally, the functionality of components of the electronic device 700 may be implemented by a single computing cluster or a plurality of computing machines, which may communicate via communication connections. Therefore, the electronic device 700 may use logical connections with one or more other servers, network personal computers (PC) or another network node to operate in a networked environment.

The input device 750 may be one or more input devices, such as a mouse, a keyboard, a tracking ball, and the like. The output device 760 may be one or more output devices, such as a display, a speaker, a printer, and the like. The electronic device 700 may also communicate with one or more external devices (not shown) such as a storage device, a display device, and the like, communicate with one or more devices that enable a user to interact with the electronic device 700, or communicate with any devices (e.g., a network card, a modem, and the like) that enable the electronic device 700 to communicate with one or more other electronic devices via the communication unit 740 as needed. Such communication may be performed via input/output (I/O) interfaces (not shown).

According to example implementations of the present disclosure, there is provided a computer-readable storage medium having computer-executable instructions stored thereon, where the computer-executable instructions are executed by a processor to implement the method described above. According to example implementations of the present disclosure, there is further provided a computer program product tangibly stored on a non-transitory computer-readable medium and including computer-executable instructions, where the computer-executable instructions are executed by a processor to implement the method described above.

Various aspects of the present disclosure are described herein with reference to flowcharts and/or block diagrams of methods, apparatuses, devices and computer program products implemented according to the present disclosure. It should be understood that each block of the flowcharts and/or block diagrams, and combinations of blocks in the flowcharts and/or block diagrams, may be implemented by computer-readable program instructions.

These computer-readable program instructions may be provided to a processor of a general-purpose computer, a special-purpose computer, or other programmable data processing apparatus to produce a machine, such that these instructions, when executed by the processor of the computer or other programmable data processing apparatus, produce means to implement the functions/acts specified in one or more blocks of the flowcharts and/or block diagrams. These computer-readable program instructions may also be stored in a computer-readable storage medium, these instructions cause the computer, the programmable data processing apparatus, and/or other devices to work in a specific manner, and thus, the computer-readable medium having the instructions stored therein includes a manufactured product, which includes instructions implement various aspects of the functions/acts specified in one or more blocks of the flowcharts and/or block diagrams.

The computer-readable program instructions may be loaded onto a computer, other programmable data processing apparatus, or other devices, so that a series of operation steps are performed on the computer, the other programmable data processing apparatus, or the other devices to generate a computer-implemented process, so that the instructions executed on the computer, the other programmable data processing apparatus, or the other devices implement the functions/acts specified in one or more blocks of the flowcharts and/or block diagrams.

The flowcharts and block diagrams in the drawings show the possibly implemented architectures, functions, and operations of the system, method and computer program product according to a plurality of implementations of the present disclosure. In this regard, each block in the flowcharts or block diagrams may represent a module, program segment, or part of an instruction, which contains one or more executable instructions to implement the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagrams and/or the flowcharts, as well as combinations of the blocks in the block diagrams and/or the flowcharts may be implemented by a dedicated hardware-based system that executes specified functions or acts, or may be implemented by a combination of dedicated hardware and computer instructions.

Various implementations of the present disclosure have been described above, and the above descriptions are for the purpose of example, non-exhaustive, and not limited to the disclosed implementations. Many modifications and variations will be apparent to those of ordinary skill in the art without departing from the scope of the described implementations. The terms used herein are chosen to best explain the principles of the implementations, the practical applications, or improvements to the technologies in the market, or to enable other those of ordinary skill in the art to understand the implementations disclosed herein.

## Claims

1. A method (300) for message output, comprising:
determining (310), based on confirmation of message output via an external device, a message to be output via the external device; and
outputting (320), based on a message output policy for the external device, the determined message via the external device.

2. The method of claim 1, wherein determining a message to be output via the external device comprises:
generating, based on confirmation of a first message output type via the external device, a first message output via the external device based on a notification message of at least one application on a terminal device, wherein the terminal device is communicatively connectable to the external device; and
determining, based on confirmation of a second message output type via the external device, a second message output via the external device based on interaction contextual information related to a user, and optionally, wherein the first message is a summary of the notification message of the at least one application, and wherein generating the first message comprises:
determining summary information based on the notification message of the at least one application; and
generating the first message based on the summary information.

3. The method of claim 1 or 2, wherein the message output policy indicates a message output frequency and/or an output mode of the message by the external device, and outputting the determined message via the external device comprises:
outputting the message via the external device according to the message output frequency; and/or
outputting the message via the external device according to the output mode, and optionally, wherein outputting the determined message via the external device comprises:
outputting the message via the external device in response to the output mode being a first output mode; or,
in response to the output mode being a second output mode,
outputting, via the external device, a request message for requesting user confirmation; and
outputting the message via the external device in response to receiving a reply to the request message and the reply indicating permission of message output, and optionally, the method further comprising:
stopping outputting the message in response to no reply being received after a preset duration of outputting the request message, or in response to the reply being received and indicating rejection of the message output.

4. The method of claim 3, further comprising:
determining the output mode of the message by the external device based on a user setting for the output mode; or
determining the output mode of the message by the external device based on importance of the message, and optionally, wherein determining the output mode of the message by the external device based on the importance of the message comprises:
determining, in response to a user setting for an importance-based output mode, the output mode of the message by the external device based on the importance of the message, and optionally, wherein determining the output mode of the message by the external device based on the importance of the message comprises:
determining that the output mode of the message by the external device is a first output mode in response to the message having first importance, wherein the first output message mode indicates message output without user confirmation;
determining that the output mode of the message by the external device is a second output mode in response to the message having second importance, wherein the second output mode indicates message output with user confirmation, wherein the first importance is higher than the second importance.

5. The method of any of claims 1 to 4, wherein the message output policy further indicates a notification sound associated with the message, and wherein outputting the determined message via the external device comprises:
outputting the notification sound associated with the message via the external device; and
outputting the message via the external device after outputting the notification sound.

6. The method of any of claims 1 to 5, wherein the message output policy further indicates stopping outputting message notification within a predefined time period, and wherein outputting the determined message via the external device comprises:
outputting the message via the external device in response to a detection that current time is not within the predefined time period.

7. The method of any of claims 1 to 6, wherein outputting the determined message via the external device comprises:
setting the message to a waiting state in response to a determination that a conflict condition related to the message output for the external device is satisfied; or
outputting the message via the external device in response to a determination that the conflict condition related to the message output for the external device is not satisfied.

8. The method of claim 7, wherein satisfaction of the conflict condition is determined based on at least one of the following:
whether a call is being made via the external device; and
a wearing state of the external device.

9. A method (400) for message output, implemented at an external device, the method comprising:
receiving (410) a message to be output from a terminal device, wherein the message is determined by the terminal device based on a message output policy configured for the external device; and
outputting (420), by the external device, the received message.

10. The method of claim 9, wherein the external device has a communication connection with the terminal device, and wherein the method further comprises:
receiving, from the terminal device via the communication connection, a request message for requesting user confirmation in response to the terminal device determining, based on the message output policy, that the message is to be output after user confirmation;
outputting, by the external device, the request message for requesting user confirmation; and
sending, in response to receiving a reply to the request message, the received reply to the terminal device via the communication connection.

11. A wearable device configured to perform the method of any of claims 9 to 10.

12. The wearable device of claim 11, wherein the wearable device comprises a headphone, a pair of smart glasses, or a ring.

13. An electronic device (700), comprising:
at least one processor (710); and
at least one memory (720) coupled to the at least one processor (710) and storing instructions for execution by the at least one processor (710), the instructions, when executed by the at least one processor (710), causing the electronic device (700) to perform the method of any of claims 1 to 8, or implement the method of any of claims 9 to 10.

14. A computer-readable storage medium having computer-executable instructions stored thereon which are executable by a processor to implement the method of any of claims 1 to 8, or implement the method of any of claims 9 to 10.

15. A computer program product tangibly stored in a computer storage medium and comprising computer-executable instructions which, when executed by a device, cause the device to perform the method of any of claims 1 to 8, or implement the method of any of claims 9 to 10.
